Europäisches Patentamt

European Patent Office

Office européen des brevets

(11) Veröffentlichungsnummer: **0 290 789**

**A2**

(19)

(12) **EUROPÄISCHE PATENTANMELDUNG**

(21) Anmeldenummer: 88105682.4

(51) Int. Cl.⁴: **G01B 11/02**

(22) Anmeldetag: 09.04.88

(30) Priorität: 11.05.87 DE 3715627

(43) Veröffentlichungstag der Anmeldung:
17.11.88 Patentblatt 88/46

(84) Benannte Vertragsstaaten:
CH FR GB IT LI SE

(71) Anmelder: **Hommelwerke GmbH**
**Alte Tuttlinger Strasse 20**
**D-7730 VS-Schwenningen(DE)**

(72) Erfinder: **Ulbers, Gerd, Dr.**
**Lindenbaumstrasse 10**
**D-7730 VS-Weilersbach(DE)**

(74) Vertreter: **Leine, Sigurd, Dipl.-Ing. et al**
**Dipl.-Ing. Sigurd Leine Dipl.-Phys. Dr.**
**Norbert König Patentanwälte**
**Burckhardtstrasse 1**
**D-3000 Hannover 1(DE)**

(54) **Vorrichtung zur Messung des Abstandes zwischen der Vorrichtung und einer Messfläche.**

(57) Vorrichtung zur Messung des Abstandes zwischen der Vorrichtung und einer Meßfläche, auf der ein optischer Meßreflektor angeordnet ist. Die Vorrichtung weist ein erstes optisches Interferometer auf, das einen ersten Meßwellenleiter aufweist, dessen eines Ende mit einem Laser verbunden und dessen anderes Ende auf den Meßreflektor gerichtet ist, der das Licht in den Meßwellenleiter zurückwirft. Das erste optische Interferometer weist einen Bezugswellenleiter auf, der mit dem Meßwellenleiter gekoppelt ist, an seinem einen Ende einen Spiegel und an seinem anderen Ende einen ersten lichtelektrischen Wandler aufweist, der mit der Anzeigeeinrichtung zur Anzeige des elektrischen Ausgangssignals des ersten lichtelektrischen Wandlers verbunden ist. Außerdem ist ein zweites optisches Interferometer vorgesehen, das aufweist einen zweiten Meßwellenleiter, dessen eines Ende mit dem Laser und dessen anderes Ende auf einen fest mit der Vorrichtung verbundenen Bezugsreflektor gerichtet ist, sowie einen zweiten Bezugswellenleiter, der mit dem zweiten Meßwellenleiter über eine Koppelstelle gekoppelt ist, an seinem einen Ende einen Spiegel und an seinem anderen Ende einen zweiten lichtelektrischen Wandler aufweist. Die Längen des Meßwellenleiters und des Bezugswellenleiters des zweiten optischen Interferometers sind jeweils von der Koppelstelle zu dem Spiegel bzw. dem Bezugsreflektor verschieden. Die Ausgangssignale des ersten lichtelektrischen Wandlers und des zweiten lichtelektrischen Wandlers sind in eine Vergleichseinrichtung eingespeist, die ein Ausgangssignal erzeugt, das von dem Unterschied der eingespeisten Ausgangssignale abhängt und das in eine Korrektureinrichtung zur Korrektur der Wellenlänge des Lichts des Lasers und/oder zur Korrektur der Anzeige der Anzeigeeinrichtung eingespeist ist. Mit dieser Vorrichtung ist es möglich, große Längen im Meterbereich und darüber mit hoher Genauigkeit zu messen.

FIG. 1

## Vorrichtung zur Messung des Abstandes zwischen der Vorrichtung und einer Meßfläche

Die Erfindung betrifft eine Vorrichtung der im Oberbegriff des Anspruchs 1 genannten Art zur Messung des Abstandes zwischen der Vorrichtung und einer Meßfläche.

Die deutsche Patentanmeldung P 36 30 887 beschreibt eine Vorrichtung zur Messung kleiner·Längen, mit einer in Richtung der zu messenden Länge beweglich gelagerten Tastspitze, mit einem Wandler zur Umwandlung der Bewegungen der Tastspitze in entsprechende elektrische Signale und mit einer Anzeigeeinrichtung zur Anzeige dieser Signale. Diese Vorrichtung ist dadurch gekennzeichnet, daß der Wandler ein optisches Interferometer enthält, das einen Meßwellenleiter aufweist, dessen eines Ende mit einem Laser und dessen anderes Ende mit einer optischen Einrichtung verbunden ist, die das Licht auf einen im Abstand angeordneten Meßspiegel richtet, der das Licht zu der optischen Einrichtung zurückwirft und der mit der Tastspitze oder einem sich mit diesem bewegenden Teil verbunden ist. Das Interferometer weist einen Bezugswellenleiter auf, der mit dem Meßwellenleiter gekoppelt ist, an seinem einen Ende einen Spiegel und an seinem anderen Ende einen lichtelektrischen Wandler aufweist, der mit der Anzeigevorrichtung zur Anzeige des elektrischen Ausgangssignals des lichtelektrischen Wandlers verbunden ist. Es handelt sich also um eine spezielle Vorrichtung zur Messung sehr kleiner Längen unter Zwischenschaltung eines mechanischen Abtasters, dessen Lage oder Stellung festgestellt und als Maß für die gemessene Länge ausgewertet wird. Zur Messung sehr großer Längen ist diese bekannte Vorrichtung nicht geeignet, da in die Messung der Länge die Wellenlänge des Lasers eingeht, die bei bekannten Lasern trotz Temperatur-und Stromkonstanthaltung nicht ausreichend konstant ist.

Der Erfindung liegt die Aufgabe zugrunde, eine Vorrichtung der betreffenden Art zur Messung des Abstandes zwischen der Vorrichtung und einer Meßfläche zu schaffen, mit der es möglich ist, große Längen im Meterbereich und darüber mit hoher Genauigkeit zu messen.

Die der Erfindung zugrundeliegende Aufgabe wird durch die im Kennzeichen des Anspruchs 1 angegebene Lehre gelöst.

Der erfindungsgemäßen Lehre liegt der Gedanke zugrunde, den zu messenden Abstand oder die entsprechende Länge grundsätzlich mit Hilfe eines optischen Interferometers zu messen, in dessen Meßlichtweg die Strecke zwischen der Vorrichtung und der Meßfläche eingelagert ist. Das Licht aus dem einen Meßwellenleiter wird zu diesem Zwecke ganz einfach auf die zu messende Oberfläche gerichtet, von wo es nach Reflexion in den Meßwellenleiter zurückgelangt. Aufgrund der Verwendung des Interferometers liegt die Meßgenauigkeit in der Größenordnung der Wellenlänge des verwendeten Lichts und auch darunter, wenn eine Phasenmessung erfolgt. Die Phasenmessung mit Hilfe eines Interferometers ist grundsätzlich bekannt, s. die Zeitschrift "Laser und Optoelektronik", 1/1984 Seite 19, Bild 3.

Um die grundsätzlich mögliche hohe Genauigkeit einer mit einem Interferometer arbeitenden Vorrichtung zur Längenmessung praktisch ausnutzen zu können, geht der Grundgedanke der Erfindung weiter dahin, die Wellenlänge des für die Messung verwendeten Lichts zu stabilisieren, indem das Licht in ein zweites Interferometer eingespeist wird, in dem die Lichtwege konstant sind und auf diese Weise ein Lichtwellenlängennormal geschaffen ist. Um nun ein Ausgangssignal des zweiten Interferometers zu - schaffen, das von Änderungen der Wellenlänge abhängt, durchläuft erfindungsgemäß das Licht bis zur Interferenz unterschiedliche Wegstrecken, so daß bei Wellenlängenänderungen Phasenverschiebungen am Interferenzort und damit Änderungen des Ausgangssignals des Interferometers auftreten, die zur Korrektur der Wellenlänge des verwendeten Lichts beispielsweise durch Änderung des Speisestromes eines für die Erzeugung des Lichts verwendeten Lasers oder durch Korrektur der Anzeige der Anzeigeeinrichtung für die gemessene Länge ausgenutzt werden können.

Die Anzeigeeinrichtung kann digital sein und mit einem vorgeschalteten Zähler zusammenarbeiten, der beispielsweise die Nulldurchgänge des Ausgangssignals des ersten, zur eigentlichen Messung dienenden Interferometers zählt. Weil der Abstand bzw. die Länge von einem Ausgangspunkt aus zunehmen oder abnehmen kann, sind gemäß der Lehre des Anspruchs 3 Mittel vorgesehen, die bei Wellenlängenänderungen Drehfelder erzeugen, die eine Vorwärts-Rückwärtszählung mittels eines Vor-Rückwärtszählers ermöglichen, so daß Abstands-oder Längenänderungen in zwei Richtungen meßbar sind.

Die verwendeten Interferometer können jede beliebige Ausführungsform haben. Statt begrenzter Lichtleiter können auch lichtleitende, flächige Schichten verwendet werden, wie das an sich allgemein bekannt ist.

Das von der Vorrichtung auf die Meßfläche geworfene Licht kann ein paralleles Strahlenbündel oder auch fokussiertes Licht sein. Der optische Meßreflektor auf der Meßfläche kann durch die Meßfläche selbst gebildet sein, oder durch einen auf der Meßfläche angeordneten Reflektor in Form wenigstens einer Glaskugel oder eines Spiegels.

Bei Verwendung der Vorrichtung gemäß Anspruch 1 ist zum Zwecke der Eichung eine Messung eines bekannten Weges zweckmäßig, der z.B. durch einen bekannten Hub eines Piezokristalls unter dem Meßspiegel realisiert werden kann. Die Größe der erforderlichen Korrektur bei Wellenländenänderungen hängt von dem Unterschied der verschiedenen Wege des Lichts in dem zweiten Interferometer ab, die für die Größe der Interferenz maßgebend sind. Dieser Unterschied wird in der Vorrichtung beliebig, aber fest gewählt. Soll nun der Korrekturwert genau so groß sein, daß er den Fehler aufgrund von Wellenlängenänderungen genau kompensiert, so ist die Anwendung der Lehre des Anspruchs 10 zweckmäßig, wonach der für die Interferenz maßgebende Lichtwegunterschied im zweiten Interferometer auf die halbe Wellenlänge des verwendeten Lichts bezogen und danach die Bewichtung der Korrektur bestimmt wird.

Zusätzlich zu dem zweiten Interferometer kann auch ein drittes Interferometer verwendet werden, das genauso aufgebaut und angeschlossen ist wie das zweite Interferometer, jedoch zwischen dem Bezugsreflektor und dem Meßwellenleiter eine Luftstrecke aufweist. Diese ist eine Variable in dem Laufweg des Lichts, da dieser Weg von dem Brechungsindex der Luft in der Luftstrecke abhängt. Folglich ist das Ausgangssignal dieses dritten Interferometers von dem Brechungsindex der Luft in der Luftstrecke abhängig, so daß es möglich ist, die Messung des Abstandes bzw. des Weges mit der erfindungsgemäßen Vorrichtung auch hinsichtlich von Änderungen des Brechungsindexes der Luft zu korrigieren. Diese Lehre hat auch für sich erfinderische Bedeutung, da sie eine einfache Möglichkeit darstellt, den Brechungsindex der Luft und seine Änderungen zu messen.

Anhand der Zeichnung soll die Erfindung näher erläutert werden.

Fig. 1 zeigt schematisch in der Draufsicht ein Ausführungsbeispiel gemäß der Erfindung,

Fig. 2 zeigt eine vergrößerte Seitenansicht der Fig. 1,

Fig. 3 zeigt ein Blockschaltbild der an die Vorrichtung gemäß Fig. 1 angeschlossenen Auswerte-und Anzeigeeinrichtung und

Fig. 4 zeigt eine Abwandlung der Ausführungsform gemäß Fig. 1.

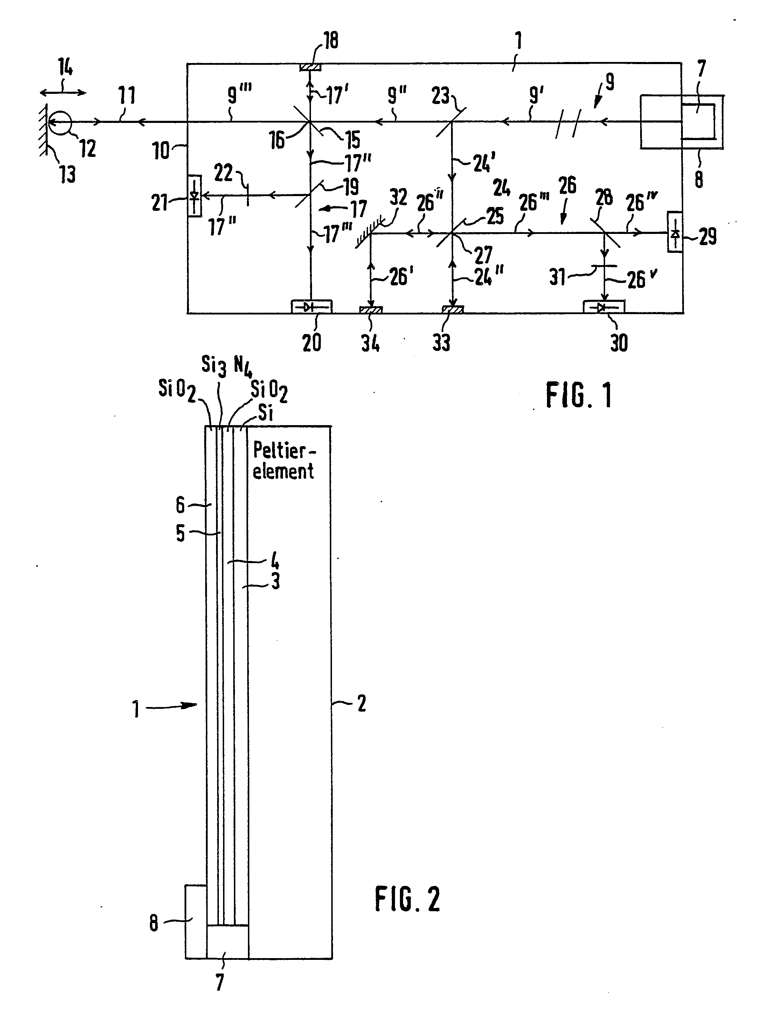

Fig. 1 zeigt eine Platte 1, die, wie das aus Fig. 2 ersichtlich ist, auf einem Peltier-Element aufgebracht ist und aus Schichten 3 aus Si, 4 aus $SiO_2$, 5 aus $Si_3N_4$ und 6 aus $SiO_2$ besteht. In der Schicht 5 sind, wie das aus Fig. 1 ersichtlich ist, mehrere lichtwirksame Elemente und Leiter angeordnet. Seitlich an der Platte 1 ist ein Laser 7 angeordnet, der Licht in die Schicht 5 aussendet. Auf dem Laser 7 sitzt außerdem ein Temperatursensor 8, mit dessen Hilfe das Peltier-Element 2 so gesteuert wird, daß die Temperatur in hohem Maße konstant gehalten wird.

Wie aus Fig. 1 ersichtlich ist, strahlt der Laser 7 in einen Meßwellenleiter 9 mit Teilstücken 9$^I$, 9$^{II}$ und 9$^{III}$. Das dem Laser 7 abgewandte Ende des Meßwellenleiters 9$^{III}$ mündet in einer Kante 10 in der Platte 1, wo das Licht als Strahl 11 austritt und auf einen Meßreflektor 12 trifft, der sich auf einer Meßfläche 13 befindet, deren Abstand von der Kante 10 mit der Vorrichtung gemessen werden soll und somit einen unterschiedlichen Abstand haben kann, was durch einen Doppelpfeil 14 angedeutet ist.

Der Meßwellenleiter 9 ist über einen Strahlteiler 15 im Bereich einer Koppelstelle 16 mit einem Bezugswellenleiter 17 gekoppelt, der in einzelne Abschnitte 17$^I$, 17$^{II}$ und 17$^{III}$ unterteilt ist. Der Abschnitt 17$^I$ führt zu einem Spiegel 18, während zur anderen Seite der Koppelstelle 16 das Teilstück 17$^{II}$ des Bezugswellenleiters 17 zu einem Strahlteiler 19 führt, von wo das Licht einmal in den Teilabschnitt 17$^{III}$ und außerdem in ein weiteres Teilstück 17$^{IV}$ aufgeteilt wird. Das Teilstück 17$^{III}$ führt zu einer Fotodiode 20, während das Teilstück 17$^{IV}$ zu einer Fotodiode 21 führt und außerdem einen Phasenschieber 22 aufweist, der die Phase des Lichts um 90° dreht, so daß die Ausgangssignale an den Fotodioden 20 und 21 um 90° versetzt sind und ihre elektrischen Ausgangssignale zur Erzeugung eines Drehfeldes verwendet werden können.

Zwischen den Abschnitten 9$^I$ und 9$^{II}$ des Meßwellenleiters 9 befindet sich ein Strahlteiler 23, so daß Licht aus dem Meßwellenleiter 9 in einen zweiten Meßwellenleiter 24 gelangt, der in Teilabschnitte 24$^I$ und 24$^{II}$ unterteilt ist, zwischen denen sich ein Strahlteiler 25 befindet, der Licht in einen zweiten Bezugswellenleiter abzweigt, der in Teilabschnitte 26$^I$, 26$^{II}$, 26$^{III}$, 26$^{IV}$ und 26$^V$ unterteilt ist. Der Strahlteiler 25 befindet sich an einer Koppelstelle 27. Die beiden Teilstücke 26$^{IV}$ und 26$^V$ führen von einem Strahlteiler 28 in dem zweiten Bezugswellenleiter 26 zu Fotodioden 29 und 30, wobei in dem Teilabschnitt 26$^V$ ein Phasenschieber 31 angeordnet ist, der die Phase des Lichts um 90° dreht, so daß die elektrischen Ausgangssignale der beiden Fotodioden 29 und 30 um 90° in der Phase verschoben sind und so zur Bildung eines Drehfelder dienen können.

Zwischen den Abschnitten 26$^I$ und 26$^{II}$ befindet sich ein Umlenkspiegel 32. Am Ende des Abschnittes 24$^I$ des zweiten Meßwellenleiters 24 befindet sich ein Bezugsreflektor 33, während sich am Ende des Bezugswellenleiters 26 ein Spiegel 34 befindet.

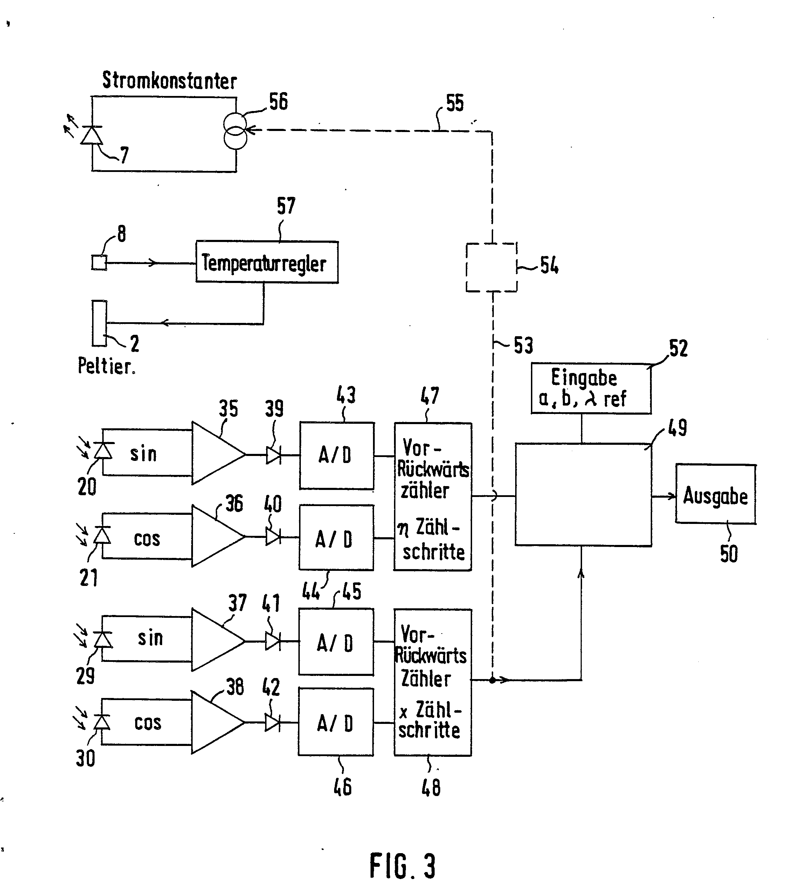

Die Länge des Abschnittes 24$^{II}$ des zweiten Meßwellenleiters 24 ist kürzer als die Summe der Längen der Abschnitte 26$^I$ und 26$^{II}$ des zweiten Bezugswellenleiters 26. Das bedeutet, daß sich bei Wellenlängenänderungen die Interferenz und damit auch das Licht an den Fotodioden 29 und 30 und deren Ausgangssignale ändert. Diese Änderung dient als Korrekturwert zur Korrektur der Wellenlänge des Lasers 7, wie das nachfolgend noch anhand der Fig. 3 erläutert wird.

Zur eigentlichen Messung dient das im wesentlichen aus dem ersten Meßwellenleiter 9 und dem ersten Bezugswellenleiter 17 gebildete Interferometer. Ändert sich der Abstand zwischen der Kante 10 der Platte 1 und dem Meßreflektor 10 bzw. der Meßfläche 13, so ändert sich die Interferenz im Bereich der Koppelstelle 16 und damit das Licht zu den Fotodioden 20 und 21, so daß diese Signale abgeben, die der Änderung des Abstandes zwischen der Kante 10 und dem Meßreflektor 12 entsprechen und daher ein Maß für die Abstandsänderungen sind. Sollen Absolutmessungen durchgeführt werden, so wird der Meßreflektor 12 um eine bekannte Wegstrecke, vorzugsweise von der Kante 10 aus, bewegt und die Vorrichtung bzw. deren Anzeigeeinrichtung entsprechend geeicht.

In dem Blockschaltbild gemäß Fig. 3 ist gezeigt, daß die Fotodioden 20, 21 und 29, 30 über Verstärker 35 - 38, Dioden 39 - 42 und Analog/Digitalwandler 43 - 46 Signale an Vor-Rückwärtszähler liefern. Der Vor-Rückwärtszähler 47 liefert ein Ausgangssignal an einen Rechner 49, das den Abstandsänderungen zwischen der Kante 10 und dem Meßreflektor 12 in Fig. 1 entspricht. Der Rechner 49 liefert einen entsprechenden Digitalwert an eine digitale Anzeigeeinrichtung 50.

Das Ausgangssignal des Vor-Rückwärtszählers 48 hängt von der Änderung der Wellenlänge des Lasers 7 ab und gelangt über einen Rechner 51 in den Rechner 49, der das Meßsignal von dem Vor-Rückwärtszähler 47 so korrigiert, daß die Anzeige in der Anzeigeeinrichtung 50 genau der gemessenen Länge entspricht. Hierzu ist es noch erforderlich, daß der Korrekturwert von dem Vor-Rückwärtszähler 48 bewichtet wird unter Berücksichtigung der Differenz zwischen der Strecke a von der Koppelstelle 27 zu dem Spiegel 34 und der Strecke b zwischen der Koppelstelle 27 und dem Bezugsreflektor 33. Außerdem muß noch die Bezugswellenlänge $\lambda_{ref}$ Berücksichtigung finden. Die Werte a, b und $\lambda_{ref}$ können mit einer Eingabeeinrichtung 52 in den Rechner 49 eingegeben werden.

Von dem Vor-Rückwärtszähler 48 gelangt dessen Ausgangssignal über eine Leitung 53 in einen Digital-Analogwandler 54, der ein analoges Korrektursinal über eine Leitung 55 in eine Stromversorgung 56 für den Laser 7 führt. Die Teile 53, 55 sind mit gestrichelten Linien dargestellt, weil es sich hierbei um eine Alternative zur Regelung der Wellenlänge des von dem Laser 7 abgegebenen Lichts handelt.

Außerdem ist in Fig. 3 noch ein Temperaturregler 57 gezeigt, der das Signal von dem Temperatursensor 8 erhält und das Peltier-Element 2 im Sinne einer Konstanthaltung der Temperatur speist.

Die Lichtwege a und b werden bei der Herstellung der Platte 1 willkürlich aber fest gewählt. Diese beiden Wege werden, wie bereits ausgeführt, einmalig in den Rechner 49 eingegeben. Der Rechner ermittelt dann mit Hilfe des Zählwertes y des Vor-Rückwärtszählers 48 eine Änderung der Wellenlänge $\lambda_{ref}$ des Lasers 7. Bezeichnet man den Zählwert des Vor-Rückwärtszählers 47 mit x, so muß der ermittelte Weg $S = x \frac{\lambda}{2} ref$ wie folgt bei Änderung von $\lambda_{ref}$ um $\Delta\lambda$ korrigiert werden :

Pro $\frac{\lambda}{2}$ erhält man einen Zählschritt x im Michelson Interferometer. Bei Änderung der Wellenlänge $\lambda_{ref}$ um das $\Delta\lambda$ erhält man im zweiten Interferometer y Zählschritte :

$$ y = \frac{b-a}{\frac{\lambda_{ref}}{2}} - \frac{b-a}{\frac{\lambda_{ref} + \Delta\lambda}{2}} \qquad (1) $$

$$ y = \frac{2(b-a)}{\lambda_{ref}} - \frac{2(b-a)}{\lambda_{ref} + \Delta\lambda} \qquad (2) $$

hieraus folgt :

$$ \Delta\lambda = \frac{2(b-a)\lambda_{ref}}{2(b-a) - \lambda_{ref}} - \lambda_{ref} \qquad (3) $$

$\lambda_{ref}$ ist eine Wellenlänge des Halbleiterlasers, auf die alle Abweichungen bezogen werden. $\lambda_{ref}$ muß über die Messung eines bekannten Weges S aus Gleichung (1) ermittelt werden, z.B. durch bekannten Hub eines Piezokristalls unter dem Meßspiegel.

Die zuzuordnende Wellenlänge zum Zählwert x ist :

$$\frac{\lambda_{ref}}{2} + \frac{\Delta\lambda}{2} \qquad\qquad (4)$$

Der korrigierte Meßweg S′ ist nun :

$$S' = x \left( \frac{\lambda_{ref}}{2} + \frac{\Delta\lambda}{2} \right) \qquad\qquad (5)$$

$$S' = x \left( \frac{\lambda_{ref}(b-a)}{2(b-a) - y \cdot \lambda_{ref}} \right) \qquad\qquad (6)$$

Der Wert für $\lambda_{ref}$ wird in den Rechner 49 eingegeben, und man erhält als Ausgabe den exakten Wert S′ für den zurückgelegten Weg des Meßreflektors 12, der weitgehend frei von Wellenlängenschwankungen des Lasers 7 ist. Die Meßunsicherheit für S′ wird im wesentlichen nur noch von der Meßunsicherheit von $\lambda_{ref}$ bestimmt.

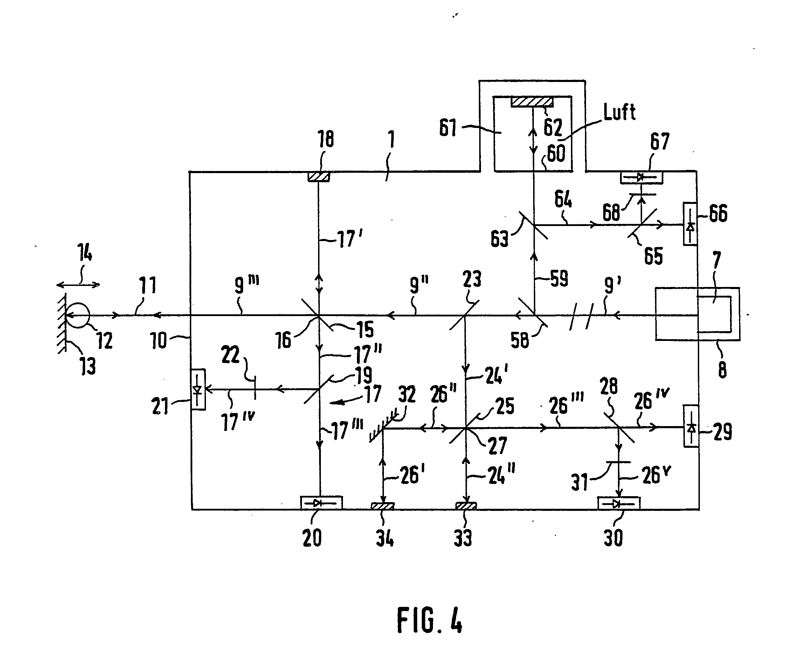

Fig. 4 zeigt eine Weiterbildung der Ausführungsform gemäß Fig. 1. Gleiche Teile sind mit gleichen Bezugsziffern versehen. Zusätzlich ist in den Meßwellenleiter 9 ein Abzweigspiegel 58 angeordnet, der Licht in einen dritten Meßwellenleiter 59 richtet. Das Licht tritt aus diesem Meßwellenleiter 59 an einer Kante 60 aus und läuft durch eine Luftstrecke 61 zu einem Spiegel 62 und von dort wieder durch die Luftstrecke 61 zurück in den Meßwellenleiter 59. In diesem ist ein Abzweigspiegel 63 angeordnet, von dem ein dritter Bezugswellenleiter 64 über einen weiteren Abzweigspiegel 65 zu Fotodioden 66 und 67 führt, wobei dem Lichtweg zu der Fotodiode 67 ein Phasenschieber 68 vorgeschaltet ist, der die Phase um 90° dreht, so daß die Ausgangssignale der Fotodioden 66 und 67 um 90° verschoben sind und sich ein Drehfeld bilden läßt, mit dem ein Vor-Rückwärtszähler speisbar ist, dessen Ausgangssignal ebenso wie das des Vor-Rückwärtszählers 48 in den Rechner 49 einspeisbar ist. Dieser so gebildete Korrekturwert ist von dem Brechungsindex der Luft in der Luftstrecke 61 abhängig. Auf diese Weise kann der Meßwert auch noch in bezug auf den Brechungsindex der Luft korrigiert werden. Die elektrische Schaltung zwischen den Fotodioden 66 und 67 und dem Rechner 49 ist in gleicher Weise aufgebaut wie die zwischen den Fotodioden 29, 30 und dem Rechner 49.

## Ansprüche

1. Vorrichtung zur Messung des Abstandes zwischen der Vorrichtung und einer Meßfläche, mit einem an der Meßfläche vorgesehenen Tastorgan, mit einem Wandler zur Umwandlung der Lage des Tastorgans in entsprechende elektrische Signale und mit einer Anzeigeeinrichtung zur Anzeige dieser Signale, **dadurch gekennzeichnet,**

daß das Tastorgan ein optischer Meßreflektor (5) ist, der auf der Meßfläche angeordnet oder mit dieser verbunden ist,

daß der Wandler ein erstes optisches Interferometer enthält, das einen ersten Meßwellenleiter (9) aufweist, dessen eines Ende mit einem Laser (7) verbunden und dessen anderes Ende auf den Meßreflektor (12) gerichtet ist, der das Licht in den ersten Meßwellenleiter (9) zurückwirft,

daß das erste Interferometer einen ersten Bezugswellenleiter (17) aufweist, der mit dem ersten Meßwellenleiter (9) gekoppelt ist, an seinem Ende einen Spiegel (18) und an seinem anderen Ende einen ersten lichtelektrischen Wandler (20, 21) aufweist, der mit der Anzeigeeinrichtung (50) zur Anzeige des elektrischen Ausgangssignals des ersten lichtelektrischen Wandlers (20, 21) verbunden ist,

daß ein zweites optisches Interferometer vorgesehen ist, das aufweist einen zweiten Meßwellenleiter (24), dessen eines Ende mit dem Laser (7) und dessen anderes Ende auf einen fest mit der Vorrichtung verbundenen Bezugsreflektor (33) gerichtet ist, sowie einen zweiten Bezugswellenleiter (26), der mit dem zweiten Meßwellenleiter (24) über eine Koppelstelle (27) gekoppelt ist, an seinem einen Ende einen Spiegel (34) und an seinem anderen Ende einen zweiten lichtelektrischen Wandler (29, 30) aufweist,

5

daß die Längen des zweiten meßwellenleiters (24) und des zweiten Bezugswellenleiters (26) jeweils von der Koppelstelle (27) zu dem Spiegel (34) bzw. dem Bezugsreflektor (33) verschieden sind,

und daß die Ausgangssignale des ersten lichtelektrischen Wandlers (20, 21) und des zweiten lichtelektrischen Wandlers (29, 30) in eine Vergleichseinrichtung eingespeist sind, die ein Ausgangssignal erzeugt, das von dem Unterschied der eingespeisten Ausgangssignale abhängt und das in eine Korrektureinrichtung (53 - 56) zur Korrektur der Wellenlänge des Lichts des Lasers (7) und/oder zur Korrektur der Anzeige der Anzeigeeinrichtung (50) eingespeist ist.

2. Vorrichtung nach Anspruch 1, **dadurch gekennzeichnet,** daß die Anzeigeeinrichtung eine digitale Anzeigeeinrichtung (50) mit einem vorgeschalteten Zähler ist.

3. Vorrichtung nach Anspruch 2, **dadurch gekennzeichnet,** daß die ersten und zweiten Bezugswellenleiter (17, 26 ) jeweils mit einem Abzweigwellenleiter ($17^{IV}$, $26^V$) gekoppelt sind, deren Enden jeweils mit weiteren lichtelektrischen Wandlern (21, 30) verbunden sind und die jeweils eine Phaseneinstelleinrichtung (22, 31) zur Einstellung der Phase an den weiteren lichtelektrischen Wandlern (21, 30) aufweisen, derart, daß die Phase des Lichts an den weiteren lichtelektrischen Wandlern (21, 30) um 90° verschoben ist gegenüber den an den Bezugswellenleitern (17, 26) angeschlossenen lichtelektrischen Wandlern (20, 29) und so jeweils ein Drehfeld gebildet ist, und daß jeweils Einrichtungen (Fig. 3; 35 - 46) vorgesehen sind, die die Drehrichtung der Drehfelder bestimmen und in Abhängigkeit davon die Zählrichtung der als Vor-Rückwärtszähler (47, 48) ausgebildeten Zähler steuern.

4. Vorrichtung nach Anspruch 1 oder 3, **dadurch gekennzeichnet,** daß die Meßwellenleiter (9, 24), die Bezugswellenleiter (17, 26) bzw. die Abzweigwellenleiter ($17^{IV}$, $26^V$) in an sich bekannter Weise in oder auf der Oberfläche einer gemeinsamen Platte (1) gebildet sind, daß der Laser (7) und/oder die lichtelektrischen Wandler (20, 21; 29, 30) an einer Kante der Platte (1) angebracht sind, an der das zugehörige Ende des jeweiligen Wellenleiters (17, 26) endet, und daß die an dem einen Ende der Bezugswellenleiter (17, 26) und an dem Ende des zweiten Meßwellenleiters (24) angeordneten Spiegel (18, 34, 33) durch eine spiegelnde, insbesondere verspiegelte Seitenkante der Platte (1) gebildet sind, bis zu der sich die Bezugswellenleiter (17, 26) und der zweite Meßwellenleiter (24) erstrecken.

5. Vorrichtung nach Anspruch 4, **dadurch gekennzeichnet,** daß die Phaseneinstelleinrichtung durch zwei Elektroden gebildet ist, die sich zu beiden Seiten der Abzweigleiter ($17^{IV}$, $26^V$) über einen Teil derselben erstrecken und an eine einstellbare Gleichspannung angeschlossen sind.

6. Vorrichtung nach Anspruch 4, **dadurch gekennzeichnet,** daß die Phaseneinstelleinrichtungen (22, 31) durch $\frac{\lambda}{4}$ Plättchen gebildet sind.

7. Vorrichtung nach Anspruch 4, **dadurch gekennzeichnet,** daß an dem dem Meßreflektor (12) zugewandten Ende des ersten Meßwellenleiters (9) eine das Licht auf den Meßreflektor (12) richtende optische Einrichtung angeordnet ist, die an der Kontur oder auf der Oberfläche der Platte (1) angeordnet ist.

8. Vorrichtung nach Anspruch 4, **dadurch gekennzeichnet,** daß die lichtelektrischen Wandler (20, 21; 29, 30) und/oder der Laser (7) in die Platte (1) integriert sind.

9. Vorrichtung nach Anspruch 3, **dadurch gekennzeichnet,** daß den Vor-Rückwärtszählern (47, 48), der ein erster Rechner (49) nachgeschaltet ist, der die Differenz zwischen den Zählwerten (x, y) bildet und dem Zählwert des die digitale Anzeigeeinrichtung (50) speisenden Zählers hinzuaddiert.

10. Vorrichtung nach Anspruch 9, **dadurch gekennzeichnet,** daß dem Vor-Rückwärtszähler (48), der dem zweiten Interferometer nachgeschaltet ist, ein Rechner (49) nachgeschaltet ist, der mit einer Eingabevorrichtung (52) verbunden ist, mittels der die Längen (a, b) des zweiten Meßwellenleiters (24) und des zweiten Bezugswellenleiters (26) jeweils (a) von der Koppelstelle (27) zu dem Spiegel (34) bzw. (b) dem Bezugsreflektor (33) als Zahl von $\frac{\lambda}{2}$ Einheiten eingebbar sind, wobei λ die Wellenlänge des Lasers (7) ist, und daß der Rechner (49) den Zählwert des dem zweiten Interferometer nachgeschalteten Vor-Rückwärtszählers (48) nach der Formel(b - a)/ $\frac{\lambda}{2}$ korrigiert.

11. Vorrichtung nach Anspruch 10, **dadurch gekennzeichnet,** daß die Korrektureinrichtung zur Korrektur der Wellenlänge des Lichts des Lasers (7) eine Steuereinrichtung (53 - 56) zur Steuerung des elektrischen Stromes des als Diodenlaser ausgebildeten Lasers (7) ist.

12. Vorrichtung nach Anspruch 1, **dadurch gekennzeichnet,** daß die Korrektureinrichtung zur Korrektur der Wellenlänge des Lichts des Lasers (7) ein an die Vergleichseinrichtung angeschlossener Zähler ist, dem ein Digital/Analogwandler (54) nachgeschaltet ist, der eine Steuereinrichtung (56) zur Steuerung des elektrischen Stromes·des als Diodenlaser ausgebildeten Lasers (7) ist.

13. Vorrichtung nach Anspruch 1, **dadurch gekennzeichnet,** daß ein drittes Interferometer (59 - 67) vorgesehen ist, das genauso aufgebaut und angeschlossen ist wie das zweite Interferometer (24 - 34), jedoch zwischen dem Meßreflektor (62) und dem Meßwellenleiter (59) eine Luftstrecke (61) aufweist.

0 290 789

FIG. 1

FIG. 2

Stromkonstanter
56
55
7
8
Temperaturregler 57
2
54
Peltier.
53
Eingabe a, b, λ ref 52

sin 35 39 — 43 A/D — 47 Vor-Rückwärts zähler η Zähl-schritte
20
cos 36 40 — A/D
21
44 45
sin 37 41 — A/D — Vor-Rückwärts Zähler x Zähl-schritte
29
cos 38 42 — A/D
30
46 48

49 — Ausgabe 50

FIG. 3

FIG. 4